## Europäisches Patentamt
## European Patent Office
## Office européen des brevets

(11) Veröffentlichungsnummer : **0 155 462**
**B1**

(12) **EUROPÄISCHE PATENTSCHRIFT**

(45) Veröffentlichungstag der Patentschrift :
05.04.89

(51) Int. Cl.⁴ : **E 21 B 23/00**

(21) Anmeldenummer : **85100735.1**

(22) Anmeldetag : **25.01.85**

(54) **Bohrloch-Sonde.**

(30) Priorität : **09.02.84 DE 3404832**

(43) Veröffentlichungstag der Anmeldung :
**25.09.85 Patentblatt 85/39**

(45) Bekanntmachung des Hinweises auf die Patenterteilung : **05.04.89 Patentblatt 89/14**

(84) Benannte Vertragsstaaten :
**AT FR GB IT**

(56) Entgegenhaltungen :
**US-A- 3 023 508**
**WORLD OIL, Band 188, Nr. 6, Mai 1979, Seiten 72-74, Houston, US; E.F. BRIEGER: "New perforator anchor allows high backsurge pressures"**

(73) Patentinhaber : **PRAKLA-SEISMOS Aktiengesellschaft**
**Buchholzer Strasse 100**
**D-3000 Hannover 51 (DE)**

(72) Erfinder : **Lichter, Dieter**
**Metzhof 3**
**D-3000 Hannover 51 (DE)**
Erfinder : **Nolte, Ernst**
**Wülferoder Strasse 72**
**D-3014 Laatzen 1 (DE)**

(74) Vertreter : **Meyer, Ludgerus**
**Patentanwälte Meyer, Stach, Vonnemann**
**Jungfernstieg 38**
**D-2000 Hamburg 36 (DE)**

EP 0 155 462 B1

Jouve, 18, rue St-Denis, 75001 Paris, France

## Beschreibung

Die Erfindung betrifft eine Bohrloch-Sonde mit einem aus der Sonde seitlich auslenkbaren Andruckarm gemäß Oberbegriff des Anspruchs 1.

Bohrloch-Sonden dieser Art dienen häufig dazu, in ein Bohrloch in vorbestimmte Tiefen Geophone oder andere Meßeinrichtungen einzubringen und diese gegen die Bohrlochwand fest zu verankern. Hierzu ist es bekannt, einen oder mehrere seitlich aus der Bohrloch-Sonde auslenkbare Andruckarme zu verwenden, mit denen die Bohrloch-Sonde an die gegenüberliegende Wand des Bohrloches fest angedrückt wird. Um ein störungsfreies Einbringen der Bohrloch-Sonde in die gewünschte Tiefe zu ermöglichen, wird der Andruckarm erst nach Erreichen der vorbestimmten Tiefe aus der Bohrloch-Sonde ausgefahren. Die geschieht in der Regel durch Übertragung eines elektrischen Signals, das über ein Kabel zur Bohrloch-Sonde übertragen wird. Nach Beendigung der gewünschten Messungen ist es erforderlich, durch eine weitere Ansteuerung den Andruckarm wieder von der Bohrlochwand zu lösen und in die Sonde einzufahren. Im Falle einer elektrischen oder mechanischen Störung des Antriebssystems während des angedrückten Zustandes müssen Vorkehrungen konstruktiver Art getroffen sein, die es ermöglichen, die Sonde aus ihrem verankerten Zustand zu lösen, ohne die Sonde selbst, die Bohrlochwand oder das Zugkabel zu beschädigen.

Es sind Bohrloch-Sonden mit verschiedenen Andruckarmen bekannt, die ein indirekte Sicherheitseinrichtung aufweisen. In einer Anordnung ist der Andruckarm über ein Betätigungselement fest mit der Büchse einer Kugelumlaufspindel verbunden. Zwischen Spindeltrieb und Motorgetriebeeinheit befindet sich eine elektrisch betätigbare Kupplung, welche im eingeschalteten Zustand das Ein- oder Ausfahren des Andruckarms erlaubt. Ein als Antrieb dienender Synchronmotor erzeugt nach dem Abschalten des Speisestroms ein Rastmoment, welches aufgrund hoher Untersetzung des Antriebssystems den Andruckarm in jeder beliebigen angefahrenen Stellung blockiert. Wird die Kupplung ausgeschaltet, kann der Andruckarm durch äußere Krafteinwirkung, z. B. durch Einfahren in eine Rohrtour, einwärts gedrückt werden, da der mitlaufende Spindeltrieb aufgrund seiner Bauweise als Kugelumlaufbüchse keine Selbsthemmung besitzt.

Bei dieser Anordnung kann jedoch durch Eindringen von Bohrspülung infolge einer Beschädigung von Dichtungen die Kugelumlaufspindel derart verschmutzt werden, daß sie sich vom Andruckarm her nicht mehr in Bewegung setzen läßt. Beim Aufwärtsziehen der Sonde kann diese daher schwer beschädigt und unter Umständen ein Kabelbruch verursacht werden. Weiterhin muß in dieser Anordnung eine zusätzliche Leitung vorhanden sein, über die das Signal zum Aus- und Einrücken der Kupplung übertragen wird.

Bei anderen bekannten Andruckarmen sind Sollbruchstellen vorhanden, die im Notfall ein Heraufziehen der Sonde ermöglichen.

Aus der US-A 3,356,146 ist es bekannt, bei einer Bohrlochsonde mit seitlich auslenkbaren Andruckarmen diese als Teil eines aus mindestens drei Gliedern bestehenden Gelenkdreieck vorzusehen.

Zum Wiedereinfahren der Andruckarme in die Sonde ist ein Zurückziehen der den Arm betätigenden Antriebseinrichtung erforderlich.

Es ist auch eine Bohrlochsonde mit einem seitlich auslenkbaren Andruckarm bekannt (US-A-4,365,668), bei dem durch eine Sicherheitsausrüstung ein Ausrasten des Andruckarms ermöglicht wird, ohne daß das Bohrloch oder der Sondenkörper beschädigt wird. Dazu wird in einer Platte mit Führung, welche den Andruckarm mit einem Kraftübertragungsglied verbindet, durch äußere Einwirkung auf den Andruckarm der zugehörige Stift so geführt, dass der Andruckarm ausrastet. Nach bewußtem oder irrtümlichem Ausrasten des Andruckarms ist jeweils ein Heraufziehen der Bohrloch-Sonde an die Erdoberfläche erforderlich, um den Rastmechanismus wieder in Funktion zu versetzen. Dies ist mit erheblichem Zeitaufwand und mit hohen Kosten verbunden.

Diese Aufgabe wird durch die kennzeichnenden Merkmale des Anspruchs 1 gelöst. Unteransprüche geben vorteilhafte Weiterbildungen der Erfindung an.

Die erfindungsgemäße Sicherheitseinrichtung der Bohrloch-Sonde ermöglich es, bei einer elektrischen oder mechanischen Störung des Antriebssystems den Andruckarm zu entkoppeln, so daß die Sonde im Bohrloch gelöst wird. Damit wird eine Beschädigung des Bohrlochs durch einen noch herausstehenden Arm oder des Bohrlochkabels durch Überlastung oder der Bohrloch-Sonde selbst vermieden. Nach einer z. B. versehentlichen Entkupplung ist es möglich, durch Wiedereinrastung der Kupplung den Meßbetrieb fortzusetzen, ohne daß die Bohrloch-Sonde aus dem Bohrloch herausgezogen werden muß. Des weiteren läßt sich die Bohrloch-Sonde in einer besonderen Ausführungsform auch bei ausgefahrenem Arm in eine enge Rohrtour einfahren, ohne daß eine Beschädigung der Sonde auftritt.

Eine Schutzvorrichtung schützt das Andruckelement des Andruckarms bei nicht vollständig ein-bzw. ausgefahrenem Andruckarm vor Schaben an der Bohrlochwand.

Die Erfindung wird nachstehend anhand eines Ausführungsbeispiels unter Zuhilfenahme von Zeichnungen näher erläutert.

Fig. 1 zeigt eine Bohrloch-Sonde mit ausgelenktem Andruckarm.

Fig. 2 zeigt eine Bohrloch-Sonde mit in die Sonde eingefahrenem Andruckarm.

Fig. 3a, b zeigen eine nähere Erläuterung des Ausrastmechanismus.

Fig.4 zeigt eine Bohrloch-Sonde, nachdem der Andruckarm ausgerastet wurde.

Fig. 5 zeigt eine Bohrloch-Sonde bei Einknicken des Kraftübertragungsgliedes.

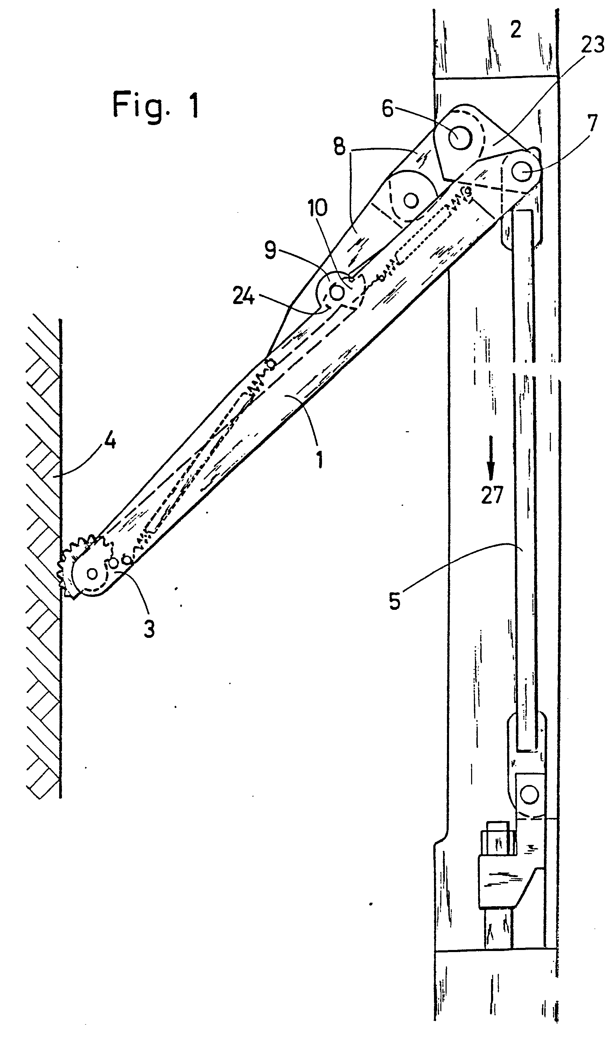

Die in Fig. 1 dargestellte Bohrloch-Sonde 2 enthält im wesentlichen ein Gelenkdreieck, das aus dem Andruckarm 1, der vorzugsweise aus zwei parallelen Schienen besteht, dem Kraftübertragungsglied 8 und der Gelenkkoppel 23 gebildet wird. In der dargestellten Ausführungsform sind Gelenkkoppel 23 und Kraftübertragungsglied 8 in einem ersten Gelenk 6 fest an der Sonde angelenkt. Am zweiten Gelenk 7 sind der Andruckarm 1 sowie die Krafterzeugungsvorrichtung 5 angelenkt. Das dritte Gelenk 9 verbindet das Kraftübertragungsglied 8 und den Andruckarm 1. Die in Fig. 1 dargestellte Arbeitsstellung des Andruckarms ist durch Herunterziehen der Krafterzeugungsvorrichtung 5 in Richung 27 bewirkt. Die Kraft der Krafterzeugungsvorrichtung kann z. B. über einen Spindelmotor aufgebracht werden. Im ausgelenkten Zustand des Andruckarms 1 drückt das freie Ende 3 des Andruckarms 1 gegen die der Sonde abgekehrte Bohrlochwand 4. Dadurch wird die Sonde selbst gegen die dem freien Ende 3 des Andruckarms 1 gegenüberliegende Bohrlochseite gedrückt und damit kann z. B. ein in der Bohrloch-Sonde vorhandenes Geophon in unmittelbaren Kontakt mit der Bohrlochwand treten.

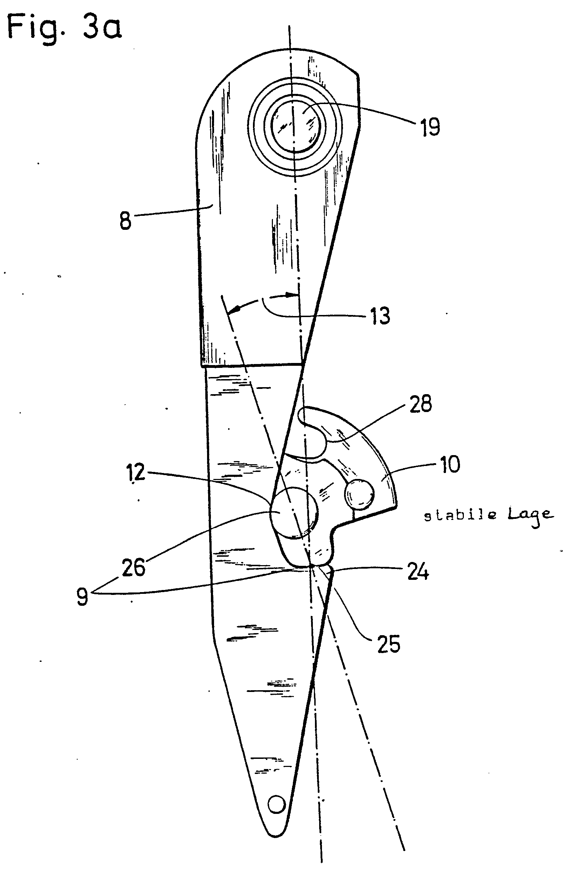

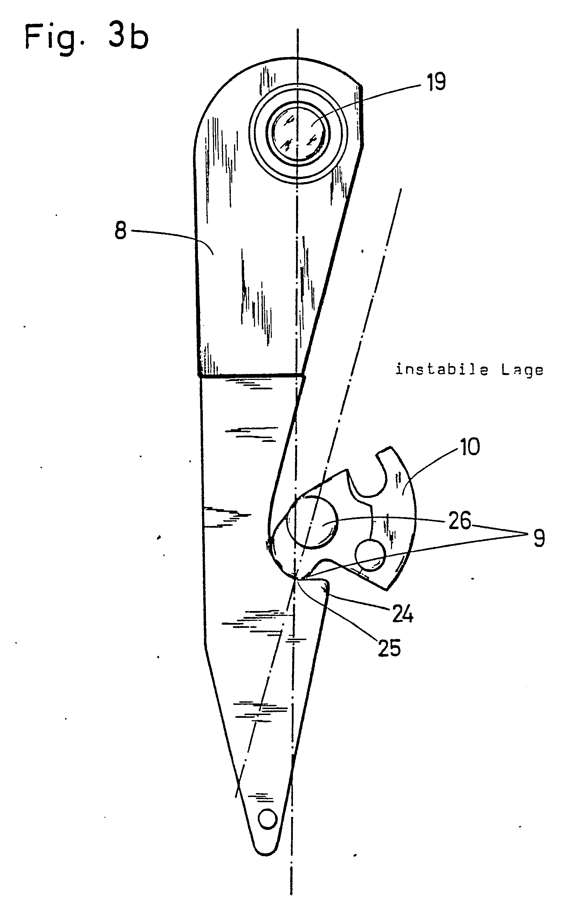

Das Aus- und Wiedereinfahren des Andruckarms 1 in die Bohrloch-Sonde 2 kann im allgemeinen problemlos mit Hilfe der Krafterzeugungsvorrichtung 5 bewirkt werden. Wenn jedoch durch eine elektrische oder mechanische Störung das Wiedereinfahren des Andruckarms gestört ist, ermöglicht die Erfindung ein Ausrasten des Andruckarms, ohne daß die Krafterzeugungsvorrichtung betätigt werden muß. Dazu ist das dritte Gelenk 9 zwischen Kraftübertragungsglied und Andruckarm als ausrastbares Gelenk ausgebildet, in der weise, daß entsprechend Fig. 3 das Kraftübertragungslied 8 einen hakenartigen Vorsprung 24 aufweist, hinter dem das Ausrastglied 10 zur Anlage kommt. Das Ausrastglied 10 besteht, wie in Fig. 3 näher erläutert ist, aus einem exzentrisch gelagerten Glied, dessen Exzentermaximum 11 dem hakenartigen Vorsprung 24 zugewandt ist und zwischen den parallelen Schienen der Arms 1 angeordnet ist und das durch äußere Einwirkung auf das Ende des Andruckarms oder das Kraftübertragungsglied von dem Vorsprung 24 des Kraftübertragungsgliedes 8 lösbar ist. Nach Lösen des dritten Gelenkes 9 kann dann der Andruckarm 1 ohne Probleme wieder in die Sonde zurückgeklappt werden, bzw. selbsttätig zurückklappen. Gelenk 9 bezeichnet die Anordnung des um das Lager 26 drehbaren Ausrastgliedes 10 in Eingriff mit dem Kraftübertragungsglied 8.

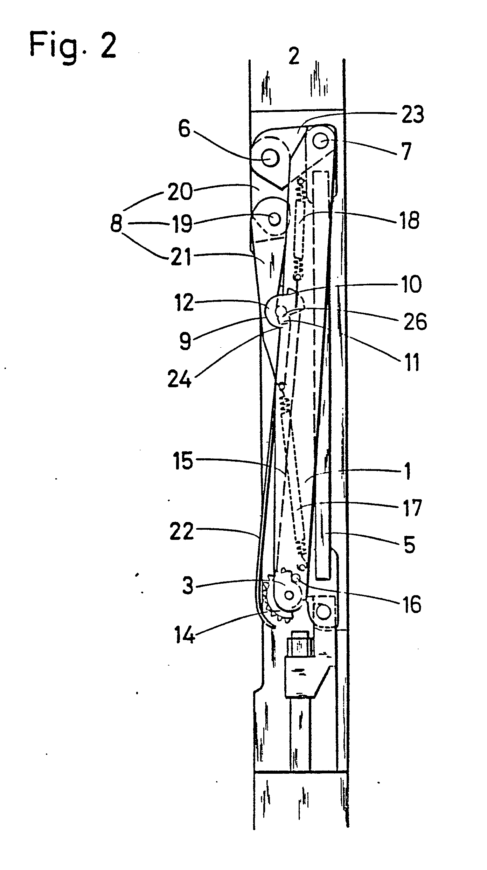

Fig. 2 zeigt eine Bohrloch-Sonde 2 mit eingefahrenem Andruckarm. Hierbei liegt das Ausrastglied 10 hinter dem Vorsprung 24 an. Durch Betätigen der Krafterzeugungsvorrichtung 5 kann dann der Andruckarm um das erste Gelenk 6 aus der Sonde herausgeklappt werden.

Fig. 3a zeigt den Rastmechanismus zur Auslösung des Andruckarms in stabiler Lage. Das Kraftübertragungslid 8 weist einen Vorsprung 24 auf, hinter den das Ausrastglied 10 im Berührungspunkt 25 zur Anlage kommt. Das Ausrastglied 10 ist im Lager 26 am Andruckarm 1 drehbar gelagert. Das Ausrastglied 10 ist im wesentlichen ein exzentrisch gelagertes Element. Es ist weiterhin im Berührungspunkt 25 zwischen Ausrastglied 10 und Kraftübertragungsglied 8 kippbar daran angelegt, wobei Fig. 3a die stabile Lage zeigt.

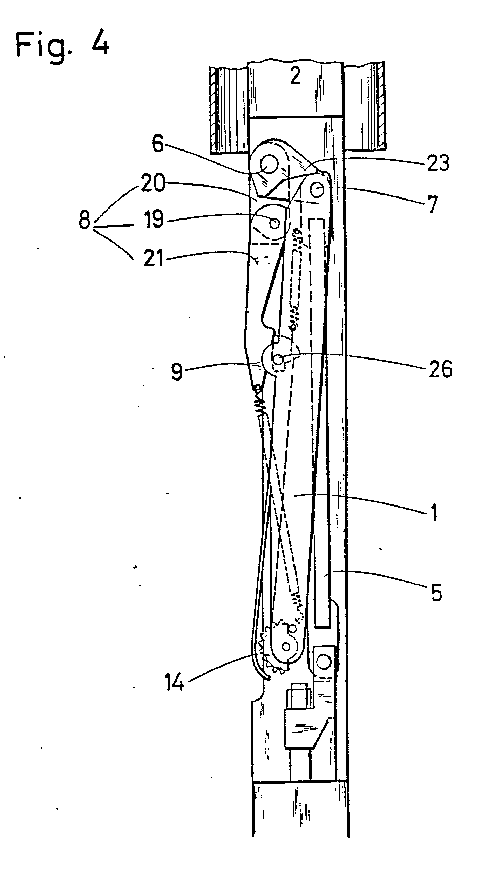

Die Kraftwirkungslinie des Kraftübertragungsgliedes 8 verläuft durch Berührungspunkt 25, über Zwischengelenk 19 bei einer Ausführungsform gemäß Fig. 4 und erstem Gelenk 6. Die Kraftwirkungslinie des Ausrastgliedes 10 verläuft durch Berührungspunkt 25 und Lager 26. Zwischen beiden Kraftwirkungslinien wird ein winkel 13 gebildet, der durch einen Anschlag 12 begrenzt ist. Der Winkel 13 bedingt, daß bei einer Drehung des Ausrastgliedes 10 dieses sich solange in einer stabilen Lage befindet, bis sich das Lager 26 über der Kraftwirkungslinie des Kraftübertragungsgliedes 8 befindet. Bei weiterer Drehung verläßt das Ausrastglied 10 seine stabile Lage, so daß dem Andruckarm 1 nunmehr von dem Kraftübertragungsglied 8 lösbar ist. Die entsprechende instabile Lage zeigt Fig. 3b.

Durch ein am Ausrastglied 10 an der Stelle 28 befestigtes und an einem Teilumfang des Ausrastgliedes 10 anliegendes Seil 15, dessen anderes Ende an einem am freien Ende 3 des Andruckarmes 1 angebrachten Andruckelement 14 befestigt ist, kann durch Drehung des Andruckelementes 14 auf das Seil eine Zugkraft ausgeübt werden, die eine Drehung des Ausrastgliedes 10 um das Lager 26 sowie den Berührungspunkt 25 und damit eine Verkleinerung des Winkels 13 bewirkt. Sobald der Winkel 13 bis auf 0° und darüber hinaus verkleinert wird, wird die stabile Lage des Ausrastgliedes 10 verlassen und damit löst sich das Ausrastglied 10 von dem Vorsprung 24, so daß die Gelenkverbindung 9 aufgehoben ist. Damit ist das Gelenkdreieck geöffnet und der Andruckarm kann nun in die Sonde zurückgeschwenkt werden.

Damit Andruckarm und Kraftübertragungsglied immer gegeneinander gehalten werden, ist eine Feder 17 vorgesehen, die zwischen Andruckarm 1 und Kraftübertragungsglied 8 gespannt ist. Zur Festlegung des Ruhezustandes des Ausrastgliedes 10 ist das Ausrastglied 10 durch eine Feder 18, deren anderes Ende am Andruckarm 1 befestigt ist, vorgespannt.

Fig. 4 zeigt den Zustand der Bohrloch-Sonde unmittelbar nach Ausrastung des Ausrastmechanismus. Es ist dargestellt daß das Ausrastelement 10 nicht mehr hinter dem Vorsprung 24 des Kraftübertragungsgliedes 8 anliegt.

Das Andruckelement 14 am freien Ende 3 des Andruckarms 1 weist eine scheibenförmige Andruckrolle auf, an deren Umfang Zähne vorgesehen sind, die einen besseren Kontakt der Andruckrolle mit der Bohrlochwand ermöglichen. Die Andruckrolle mit der Bohrlochwand ermöglichen. Die Andruckrolle weist einen Anschlag 16 auf, an dem die Andruckrolle im Ruhezustand liegt. Durch beabsichtigtes oder unbeabsichtigtes Heraufziehen der Bohrloch-Sonde im ausgefahrenen Zustand des Andruckarms 1 gerät die Andruckrolle in Drehung und zieht das an ihr außermittig angebrachte Seil 15 an. Dadurch verdreht das andere Ende des Seiles das Ausrastelement 10 und somit kann die stabile Lage des Ausrastelementes 10 aufgehoben werden. Damit löst sich das Gelenk 9 und der Andruckarm löst sich von der Bohrlochwand.

Zum Schutze des Andruckelementes 14 vor Beschädigung der Andruckrolle durch Schaben an der Bohrlochwand sind Zungen 22 vorgesehen, die federnd am Andruckarm befestigt sind und über der Andruckrolle geringfügig vorstehen. Nach Überwindung der Federkraft der Zungen 22 kann die Andruckrolle 14 in Berührung mit der Bohrlochwand kommen.

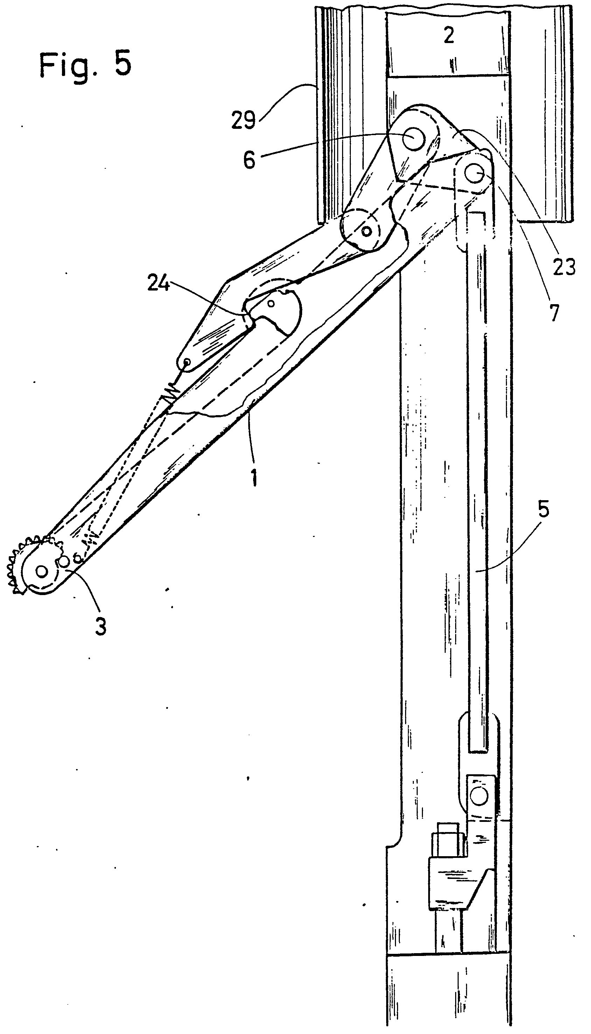

Fig. 5 zeigt eine weitere Möglichkeit zur Auslösung des Rastmechanismus. Wenn z. B. die Bohrloch-Sonde im ausgefahrenen Zustand des Andruckarms 1 ohne Berührung zur Bohrlochwand in eine enge Rohrtour hineingezogen werden soll, kann dies in einer besonderen Ausführungsform der Erfindung nach Fig. 5 durch Einknicken des aus zwei Teilen 20, 21 mit Zwischengelenk 19 bestehenden Kraftübertragungsgliedes 8 bewirkt werden. Da das Ausrastglied 10 an dem Teil 21 der Kraftübertragungseinrichtung angelegt ist, bewirkt das Einknicken des Kraftübertragungsgliedes 8 durch die Rohrtour 29 eine Veränderung des Winkels 13. Wenn das Kraftübertragungsglied 8 in einem gewissen Maße eingedrückt ist, verliert das Ausrastglied 10 damit seine stabile Lage und der Andruckarm 1 läßt sich daher von der Kraftübertragungseinrichtung lösen. Damit ist dann ein Einführen der Sonde mit dem nun frei hängenden Andruckarm in die Rohrtour 29 möglich.

Anstelle eines drehbaren Ausrastgliedes ist auch eine verschiebbare Anordnung einsetzbar, die durch Betätigung des Andruckelementes ausrastbar sein kann. Weiterhin ist anstelle einer drehbaren Andruckscheibe am freien Ende 3 des Andruckarms 1 auch eine Platte einsetzbar, deren Verschiebung eine Ausrastung ermöglicht. Die Erfindung kann gleichfalls in kinematischer Umkehr verwendet werden, nämlich, indem die Kraftübertragungseinrichtung als Druckstange wirkt und der Andruckarm im festen Gelenk gelagert ist. Das Ausrasten des Andruckarms kann dann über einen an der Oberseite des Andruckarms befindlichen Druckhebel bewirkt werden, der eine Drehung des Ausrastelementes bewirkt.

Um den gesamten Auslösemechanismus vor groben Schmutzteilen, z. B. durch in der Bohrspülung noch enthaltendes Bohrklein zu schützen, wird der Arm zwischen Andruckscheibe und Drehgelenk vorzugsweise durch einen dünnen, hochelastischen, verformbaren Schlauch allseitig umgeben.

Liste der verwendeten Bezugszeichen

1 Andruckarm
2 Sonde
3 freies Ende des Andruckarms
4 Bohrlochwand
5 Krafterzeugungsvorrichtung
6 erstes Gelenk
7 zweites Gelenk
8 Kraftübertragungsglied
9 drittes Gelenk
10 Ausrastglied
11 Exzentermaximum
12 Anschlag
13 Winkel
14 Andruckelement
15 Seil
16 Anschlag
17 Feder
18 Feder
19 Zwischengelenk
20 Teilglied
21 Teilglied
22 Zungen
23 Gelenkkoppel
24 Vorsprung
25 Berührungspunkt
26 Lager
27 Richtung
28 Befestigungsstelle
29 Rohrtour

**Patentansprüche**

1. Bohrloch-Sonde mit einem seitlich auslenkbaren Andruckarm (1), der in Ruhestellung in den Querschnitt der Sonde eingeschwenkt und dessen freies Ende in Arbeitsstellung an die Bohrlochwand andrückbar ist, mit einer einseitig am Sondenkörper befestigten Krafterzeugungsvorrichtung (5), die ein Vorschubelement aufweist, mittels dem der Andruckarm über angelenkte Hebel ausschwenkbar ist, und mit Einrichtungen zum selbsttätigen Ausrasten des Andruckarms aus seiner Arbeitsstellung, dadurch gekennzeichnet, daß der Andruckarm Teil eines aus wenigstens drei Gliedern bestehenden Gelenkdreiecks ist, dessen erstes Drehgelenk (6) fest an dem Sondenkörper befestigt ist, an dem zweiten Gelenk (7) des Gelenkdreiecks das untere Ende der Krafterzeugungsvorrichtung (5) angreift, wobei das erste und zweite Gelenk (6, 7) des Gelenkdreiecks über eine starre Verbindung (23) gekoppelt sind und das dritte, den Andruckarm mit einem Ende eines Kraftübertragungsgliedes verbindende Gelenk (9) des Gelenkdreiecks durch äußere Einwirkung auf den Andruckarm ausrastbar und nach dem Zurückschwenken des Andruckarms (1) in die Sonde (2) und dem Rückzug des Vorschubelementes der Krafterzeugungsvorrichtung (5) in dessen Ruhestellung selbsttätig wieder einrastbar ist.

2. Bohrloch-Sonde nach Anspruch 1, dadurch gekennzeichnet, daß das andere Ende des als Zugarm ausgebildeten Kraftübertragungsgliedes (8) drehbar über das erste Gelenk (6) fest an dem Sondenkörper (2) angelenkt ist und daß das zweite Gelenk (7) den Andruckarm mit der Krafterzeugungsvorrichtung (5) drehbar verbindet.

3. Bohrloch-Sonde nach Anspruch 1, dadurch gekennzeichnet, daß das andere Ende des als Druckarm ausgebildeten Kraftübertragungsgliedes (8) drehbar über das zweite Gelenk (7) an der Krafterzeugungsvorrichtung (5) angelenkt ist, und daß das gelagerte Ende des Andruckarms über das erste Gelenk (6) am Sondenkörper befestigt ist.

4. Bohrloch-Sonde nach Anspruch 2, dadurch gekennzeichnet, daß das dritte Gelenk (9) aus einem vom Kraftübertragungsglied (8) hintergriffenen, am Andruckarm (1) exzentrisch gelagerten Ausrastglied (10) besteht, wobei ein Exzentermaximum (11) des Ausrastgliedes (10) dem freien Ende des Kraftübertragungsgliedes (8) zugewandt ist und die Kraftwirkungslinie des Ausrastgliedes (10) gegenüber der Kraftwirkungslinie des Kraftübertragungsgliedes (8) einen durch einen Anschlag (12) begrenzten Winkel (13) bildet, in dessen Bereich in der Arbeitsstellung ein stabiler Rastzustand des dritten Gelenks (9) herstellbar ist.

5. Bohrloch-Sonde nach Anspruch 1 oder Anspruch 4, dadurch gekennzeichnet, daß am freien Ende (3) des Andruckarms (1) ein durch Relativbewegung zwischen Andruckarm (1) und Bohrlochwand (4) dreh- oder verschiebbares Andruckelement (14) vorgesehen ist, durch das bei einer Relativ-bewegung über eine mechanische Verbindung (15) das dritte Gelenk (9) ausrastbar ist.

6. Bohrloch-Sonde nach Anspruch 5, gekennzeichnet durch eine am freien Ende (3) des Andruckarms (1) drehbar gelagertes im Ruhezustand an einem Anschlag (16) anliegendes und am Umfang gezahntes, scheibenförmiges Andruckelement (14), an dem außermittig ein Zugseil (15) befestigt ist, dessen anderes Ende an dem Ausrastglied (10) an der dem Excenter-maximum (11) gegenüberliegenden Seite befestigt ist, wobei bei drehung des Andruckelements (14) zugleich eine Drehung des Ausrastgliedes (10) und damit verbunden eine Ausrastung des dritten Gelenks (9) durchführbar sind.

7. Bohrloch-Sonde nach Anspruch 6, dadurch gekennzeichnet, daß das Ausrastglied (10) und das Zugseil (15) gemeinsam durch eine Feder (18) in Raststellung vorgespannt sind.

8. Bohrloch-Sonde nach Anspruch 1, dadurch gekennzeichnet, daß das Kraftübertragungsglied (8) durch eine Feder (17) gegen den Andruckarm (1) gedrückt ist.

9. Bohrloch-Sonde nach Anspruch 1, dadurch gekennzeichnet, daß das Kraftübertragungsglied (8) aus zwei durch ein Zwischengelenk (19) verbundenen Teilgliedern (20, 21) besteht.

10. Bohrloch-Sonde nach Anspruch 9 und Anspruch 4, dadurch gekennzeichnet, daß das Kraftübertragungsglied (8) durch äußere Einwirkung einknickbar ist, wobei der Winkel (13) zwischen der Kraftlinie des Ausrastgliedes (10) und der Kraftlinie des Kraftübertragungsgliedes (8) über den 0°-Wert hinaus zu verkleinern und damit verbunden das dritte Gelenk (9) auslösbar ist.

11. Bohrloch-Sonde nach Anspruch 5, dadurch gekennzeichnet, daß das Andruckelement (14) durch eine unter Federkraft stehende Schutzvorrichtung geschützt ist, durch die das Andruckelement (14) erst nach Überwindung der Federkraft durch den Andruckarm (1) gegen die Bohrlochwand (4) anlegbar ist.

12. Bohrloch-Sonde nach Anspruch 11, dadurch gekennzeichnet, daß die Schutzvorrichtung an zwei seitlich von dem Andruckelement (14) am Andruckarm (1) federnd befestigten, im Ruhezustand seitlich über das Andruckelement (14) hinausragenden, der Umfangsform des Andruckelementes (14) angepaßten Zungen (22) besteht.

## Claims

1. Drill hole probe with a contact arm (1) which can be steered outwards, which in the rest position is swung into the cross-section of the probe, and the free end of which in the working position can be placed in contact with the wall of the drill hole, with a power device (5) fastened on one side to the body of the probe, this device having an advance element, by means of which the contact arm can be swung out via articulated levers, and with facilities for the self-actuating disengagement of the contact arm out of its working position, characterised in that the contact arm is a part of an articulated triangle consisting of at least three sections, the first rotating joint (6) of which is fixed firmly to the body of the probe, while the bottom end of the power device (5) engages to the second joint (7) of the articulated triangle, so that the first and second joints (6, 7) of the articulated triangle are coupled via a rigid connection (23) and the third joint (9) of the triangle, connecting the contact arm with one end of a power transmission section, can be disengaged by external action on the contact arm and after swinging the contact arm (1) back into the probe (2) and after the return of the advance element of the power device (5), can be enaged back into its rest position by self-actuation.

2. Drill hole probe as in claim 1, characterised in that the other end of the power transmission section (8) designed as a tension arm is coupled firmly to the probe body (2) and can be swivelled via the first joint (6) and that the second joint (7) connects with swivel the contact arm with the power transmission device (5).

3. Drill hole probe as in claim 1, characterised in that the other end of the power transmission link (8) designed as pressure arm is coupled with swivel via the second joint (7) to the power device (5), and that the bearing-mounted end of the contact arm is fastened to the probe body via the first joint (6).

4. Drill hole probe as in claim 2, characterised in that the third joint (9) consists of a disengaging section (10) eccentrically bearing-mounted on the contact arm (1) held at the rear by the power transmission section (8), whereby an excentre maximum (11) of the disengagement section (10) is turned to the free end of the power transmission section (8) and the power effect line of the disengagement section (10) opposite to the power effect line of the power transmission section (8) creates an angle (13) limited by a stop (12), in the area of which, in the working position, a stable engagement condition of the third joint (9) can be produced.

5. Drill hole probe as claim 1 or claim 4, characterised in that on the free end (3) of the contact arm (1) a contact element (14), which can be swivelled or displaced, is provided, through relative moment between contact arm (1) and drill hole wall (4), by means of which in the event of a relative movement via a mechanical connection (15) the third joint (9) can be disengaged.

6. Drill hole probe as claim 5, characterised in that a disc-shaped contact element (14) bearing-mounted with swivel at the free end (3) of the contact arm (1), lying in the rest condition against a stop (16) and cogged on its circumference, to which a traction rope (15) is fixed off-centre, the other end of the rope being fastened to the disengagement section (10) on the side lying opposite the excenter maximum, whereby when the contact element (14) is turned at the same time a turning of the disengagement section (10) and, consequent thereon, a disengagement of the third joint (9) can be achieved.

7. Drill hole probe as claim 6, characterised in that the disengagement section (10) and the traction rope (15) are prestressed together via a spring (18) in engagement position.

8. Drill hole probe as claim 1, characterised in that the power transmission section (8) is pressed against the contact arm (1) by a spring (17).

9. Drill hole probe as claim 1, characterised in that the power transmission section (8) consists of two part-sections (20, 21) connected by an intermediate section (19).

10. Drill hole probe as claim 9 and claim 4, characterised in that the power transmission section (8) can be collapsed by external effect, so that the angle (13) between the power line of the disengagment section (10) and the power line of the power transmission section (8) can be reduced out over the 0 value and consequent thereon the third joint (9) can be released.

11. Drill hole probe as claim 5, characterised in that the contact element (14) is protected by a protective device held by spring force, against which the contact element (14) can only be put against the drill hole wall (4) via the contact arm (1) after overcoming the spring force.

12. Drill hole probe as claim 11, characterised in that the protective device consists of two tongues (22) fixed by spring force laterally from the contact element (14) to the contact arm (1), projecting in the rest condition laterally over the contact element (14), matching the peripheral form of the contact element (14).

**Revendications**

1. Sonde de trou de forage comprenant un bras de pression (1) pouvant être déployé latéralement, qui est rétracté par pivotement dans le profil de la sonde dans la position de repos et dont l'extrémité libre peut être appliquée sous pression contre la paroi du trou de forage dans la position de travail, un dispositif générateur de force (5) fixé d'un côté au corps de la sonde, qui présente un élément de poussée au moyen duquel le bras de pression peut être déployé par pivotement, par l'intermédiaire de leviers articulés, et des dispositifs capables de dégager automatiquement le bras de pression de sa position de travail, caractérisée en ce que le bras de pression constitue une partie d'un triangle articulé composé au moins de trois éléments dont la première articulation (6) est fixée au corps de la sonde en un point fixe, tandis que l'extrémité inférieure du dispositif générateur de force (5) attaque la deuxième articulation (7) du triangle articulé, la première et la deuxième articulations (6, 7) du triangle articulé étant accouplées par une liaison rigide (23) et la troisième articulation (9) du triangle articulé, qui relie le bras de pression à une extrémité d'un élément de transmission de force, pouvant être débloquée par une action extérieure exercée sur le bras de pression et pouvant être rebloquée automatiquement après la rentrée du bras de pression (1) dans la sonde (2) par pivotement et après le retour de l'élément de poussée du dispositif générateur de force (5) à sa position de repos.

2. Sonde de trou de forage selon la revendication 1, caractérisée en ce que l'autre extrémité de l'organe de transmission de force (8), qui est constitué par un bras de traction, est articulée sur le corps (2) de la sonde, en un point fixe, par l'intermédiaire de la première articulation (6) et en ce que la deuxième articulation (7) relie de manière articulée le bras de pression au dispositif générateur de force (5).

3. Sonde de trou de forage selon la revendication 1, caractérisée en ce que l'autre extrémité de l'élément de transmission de force (8), qui est constitué par un bras de pression, est articulée sur le dispositif générateur de force (5), par l'intermédiaire de la deuxième articulation (7), et en ce que l'extrémité tourillonnée du bras de pression est fixée au corps de la sonde par l'intermédiaire de la première articulation (6).

4. Sonde de trou de forage selon la revendication 2, caractérisée en ce que la troisième articulation (9) est composée d'un élément de déblocage (10), qui est attaqué par l'arrière par l'élément de transmission de force (8), et qui est monté excentriquement sur le bras de pression (1), le maximum d'excentrique (11) de l'élément de déblocage (10) étant dirigé vers l'extrémité libre de l'élément de transmission de force (8) et la ligne d'action de force de l'élément de déblocage (10) formant, avec la ligne d'action de force de l'élément de transmission de force (8), un angle (13) limité par une butée (12), dans les limites duquel il est possible de réaliser un état de blocage stable de la troisième articulation (9) dans la position de travail.

5. Sonde de trou de forage selon la revendication 1 ou la revendication 4, caractérisée en ce qu'à l'extrémité libre (3) du bras de pression (1), est prévu un élément de pression (14), qui peut se déplacer par rotation ou translation, sous l'effet d'un déplacement relatif entre le bras de pression (1) et la paroi (4) du trou de forage, élément par lequel la troisième articulation (9) peut être débloquée en présence d'un mouvement relatif, par l'intermédiaire d'une liaison mécanique (15).

6. Sonde de trou de forage selon la revendication 5, caractérisée par un élément de pression (14) en forme de disque, denté sur sa périphérie, monté rotatif à l'extrémité libre (3) du bras de pression (1) et appuyé contre une butée (16) dans l'état de repos, auquel est fixé, en un point excentré, un câble de traction (15) dont l'autre extrémité est fixée à l'élément de déblocage (10), sur le côté qui est à l'opposé du maximum (11) de l'excentrique, de sorte que, en réponse à une rotation de l'élément de pression (14), il peut s'exécuter en même temps une rotation de l'élément de déblocage (10) et, lié à cet effet, un déblocage de la troisième articulation (9).

7. Sonde de trou de forage selon la revendication 6, caractérisée en ce que l'élément de déblocage (10) et le câble de traction (15) sont précontraints conjointement par un ressort (18) qui tend à les placer dans la position de blocage.

8. Sonde de trou de forage selon la revendication 1, caractérisée en ce que l'élément de transmission de force (8) est pressé contre le bras de pression (1) par un ressort (17).

9. Sonde de trou de forage selon la revendication 1, caractérisée en ce que l'élément de transmission de force (8) est composé de deux éléments partiels (20, 21) reliés par une articulation intermédiaire (19).

10. Sonde de trou de forage selon la revendication 9 et la revendication 4, caractérisée en ce que l'élément de transmission de force (8) peut être replié par une action extérieure, l'angle (13) entre la ligne de force de l'élément de déblocage (10) et la ligne de force de l'élément de transmission de force (8) pouvant alors diminuer au-delà de la valeur zéro degré et la troisième articulation (9) pouvant ainsi être débloquée sous cet effet.

11. Sonde de trou de forage selon la revendication 5, caractérisée en ce que l'élément de pression (14) est protégé par un dispositif de protection soumis à l'action d'un ressort et du fait de la présence duquel l'élément de pression (14) ne peut être appliqué contre la paroi (4) du trou de forage qu'après que le bras de pression (1) a surmonté la force du ressort.

12. Sonde de trou de forage selon la revendication 11, caractérisée en ce que le dispositif de protection est composé de languettes (22) adaptées à la forme de la circonférence de l'élément de pression (14), qui sont fixées élastiquement au bras de pression (1), latéralement à l'élément de pression (14), et qui, à l'état de repos, débordent latéralement au-delà de l'élément de pression (14).

Fig. 1

# Fig. 2

# Fig. 3a

8

19

13

28

10

stabile Lage

12

26

9

24

25

# Fig. 3b

instabile Lage

19

8

10

26

9

24

25

Fig. 4

Fig. 5